(19) Europäisches Patentamt / European Patent Office / Office européen des brevets

(11) EP 2 168 749 A1

(12) **EUROPEAN PATENT APPLICATION**
published in accordance with Art. 153(4) EPC

(43) Date of publication:
**31.03.2010 Bulletin 2010/13**

(21) Application number: **08791083.2**

(22) Date of filing: **11.07.2008**

(51) Int Cl.:
***B29C 45/00*** (2006.01) ***C08J 5/00*** (2006.01)
***C08K 7/02*** (2006.01) ***C08L 67/02*** (2006.01)
***C08L 67/04*** (2006.01) ***C08L 101/16*** (2006.01)
***B29K 67/00*** (2006.01) ***B29K 105/12*** (2006.01)

(86) International application number:
**PCT/JP2008/062602**

(87) International publication number:
**WO 2009/011312 (22.01.2009 Gazette 2009/04)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.07.2007 JP 2007185893**

(71) Applicant: **Fujifilm Corporation**
**Tokyo 106-0031 (JP)**

(72) Inventor: **KAWASAKI, Hidetoshi**
**Odawara-shi**
**Kanagawa 250-0001 (JP)**

(74) Representative: **HOFFMANN EITLE**
**Patent- und Rechtsanwälte**
**Arabellastrasse 4**
**81925 München (DE)**

(54) **EJECTION-MOLDED ARTICLE OF PET-FIBER-REINFORCED POLYLACTIC ACID RESIN, AND METHOD FOR PRODUCTION THEREOF**

(57) Provided is a manufacturing method for injection-molded articles, comprising subjecting a resin composition for use in injection molding, which contains a polylactic acid resin and PET fibers with a lactic acid component content of 50% by weight or more, and is compounded at a compounding temperature of 230°C or lower, to injection molding at an injection molding temperature of 190 to 230°C to obtain a molded article of high strength in which voids around the PET fibers are 50% or less on the PET fibers in sectional area in the article's sections, and the PET fibers within the article are not deteriorated. The molded article has a higher strength than conventional, and is applicable as a constituent part for larger products with heavier weights, such as copying machines and printers.

FIG.1A

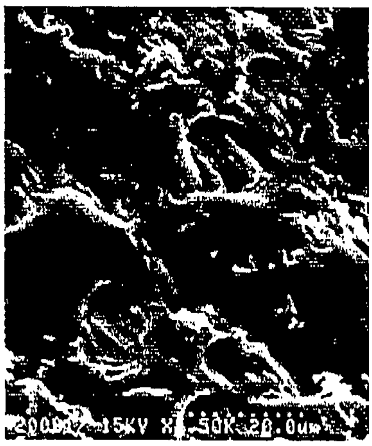




Printed by Jouve, 75001 PARIS (FR)

(Cont. next page)

FIG.1B

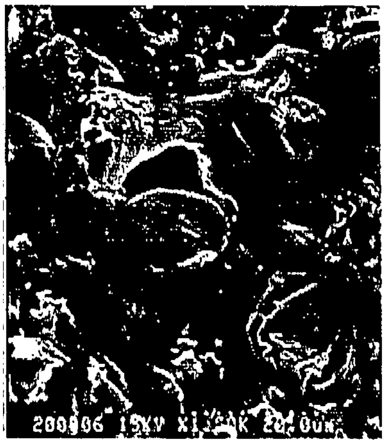

## Description

### TECHNICAL FIELD

The present invention relates to injection-molded articles of a PET fiber-reinforced polylactic acid resin and manufacturing methods for them.

### BACKGROUND ART

Recently, attempts have been made from the viewpoint of contributing to the prevention of global warming and the establishment of a sound material-cycle society to apply the constituent parts which are made of a biomass resin derived from a biological source such as plants (polylactic acid resin, for instance) to a variety of products.
In fact, such parts involve a serious problem of an inadequate mechanical strength. Some measures have previously been proposed in order to remedy this drawback.
As an example, the constituent part has been proposed for which a composition comprising polylactic acid with a petroleum-based resin mixed therein is used. By mixing a petroleum-based resin in polylactic acid, the strength of the constituent part is more improved in principle as the mixing ratio of the resin is increased.
JP 2004-7198 A has proposed the fiber-reinforced polylactic acid resin composition containing polylactic acid, glass fibers, and talc with a mean particle size of 0.1 to 3 μm that contains the glass fibers in a proportion of 5 to 60% by weight, and the talc in a proportion of 5 to 25% by weight, with respect to the whole amount of the fiber-reinforced polylactic acid resin. The document as Patent Document 1 describes that a novel fiber-reinforced polylactic acid resin composition is provided according to the proposed composition, and the molding, injection molding for instance, of the polylactic acid resin composition as provided yields the molded articles of a biodegradable plastic which are heat resistant and have a good mechanical strength such as a high impact resistance.
JP 2003-407799 A has proposed the kenaf fiber-reinforced resin composition which is a biodegradable resin composition (polylactic acid being preferred) containing kenaf fibers, and has a kenaf fiber content of 10 to 50% by weight. JP 2003-407799 A describes that molded bodies obtained by the molding of the kenaf fiber-reinforced resin composition as proposed have not only an improved mechanical strength but a greatly enhanced heat resistance.

### DISCLOSURE OF THE INVENTION

### PROBLEMS TO BE SOLVED BY THE INVENTION

The use of the compositions of JP 2004-7198 A and JP 2003-407799 A as stated above allows indeed the strength of molded articles to be improved to some extent as compared with the case of using a polylactic acid resin alone. Constituent parts (molded articles) composed of such compositions, however, are difficult to employ as a constituent part for such larger products as copying machines and printers. The reason is as follows: Products such as copying machines need higher strengths because of their large sizes and heavy weights as compared with cellular phones or the like, whereas the constituent parts which are obtained with the compositions as described in the above patent documents cannot have such a strength as a constituent part for larger products should have.
In the constituent part for which a composition comprising polylactic acid with a petroleum-based resin mixed therein is used as mentioned above, those strengths which constituent parts for larger products should have can be attained by increasing the mixing ratio of the petroleum-based resin. For this purpose, it is necessary to increase the mixing ratio of the petroleum-based resin to about 70% (that is to say, reduce the polylactic acid content to no more than about 30%), which makes it impossible to contribute to the prevention of global warming and the establishment of a sound material-cycle society.
The present invention is aimed at solving the problems as stated above.
In other words, an object of the present invention is to provide a manufacturing method allowing the manufacture of the injection-molded article of a polylactic acid resin, which is composed of a resin composition containing the lactic acid component of a polylactic acid resin and so forth in a proportion of 50% by weight or more, has a higher strength than conventional, and is applicable as a constituent part for larger products with heavier weights, such as copying machines and printers. Another object of the present invention is to provide a molded article obtained by such a manufacturing method. To provide an electronic system including, as its constituent part, such a molded article is also an object of the present invention.

### MEANS TO SOLVE THE PROBLEMS

The inventor of the present invention diligently researched in order to solve the aforementioned problems. He

has found after all that, by subjecting a resin composition containing a polylactic acid resin and PET fibers and compounded at a temperature not higher than a specified temperature to injection molding at a temperature within a specified range, the molded article is obtained in which voids (gaps) around the PET fibers are 50% or less on the PET fibers in sectional area in the article's sections, and the PET fibers within the article are not deteriorated, and that the molded article as such solves the problems, the present invention having thus been completed.

The present invention provides (1) through (9) as below.

(1) A manufacturing method for injection-molded articles, comprising subjecting a resin composition for use in injection molding, which contains a polylactic acid resin and PET fibers with a lactic acid component content of 50% by weight or more, and is compounded at a compounding temperature of 230°C or lower, to injection molding at an injection molding temperature of 190 to 230°C to obtain a molded article of high strength in which voids around the PET fibers are 50% or less on the PET fibers in sectional area in the article's sections, and the PET fibers within the article are not deteriorated.
(2) The manufacturing method for injection-molded articles according to the above (1), wherein the resin composition for use in injection molding contains the PET fibers in a proportion of 10 to 30% by weight.
(3) The manufacturing method for injection-molded articles according to the above (1) or (2), wherein the PET fibers have a cross section with a diameter D of 1 to 20 μm, and a ratio of a length L (μm) of the PET fibers to the diameter D (L/D) is 100 to 1,000.
(4) A molded article of high strength obtainable by the manufacturing method for injection-molded articles according to any one of the above (1) through (3), wherein the voids around the PET fibers are 50% or less on the PET fibers in sectional area in the article's sections, and the PET fibers within the article are not deteriorated.
(5) The molded article of high strength according to the above (4), which has a mean thickness X of 1.5 mm or more and a weight Y of 0.15 kg or more.
(6) The molded article of high strength according to the above (4) or (5), which meets Formula (I) below:

$$\text{Formula (I)}: X/Y = 0.03 \sim 3.3.$$

(7) A cabinet comprising the molded article of high strength according to any one of the above (4) through (6) as its major constituent part.
(8) An electronic system which includes the cabinet according to the above (7) and weighs 10 kg or more.
(9) The electronic system according to the above (8), which is a copying machine, a printer, a photoprinting apparatus, a printing press, a medical instrument, or an instrument for life-science use.

## EFFECTS OF THE INVENTION

According to the present invention, a manufacturing method allowing the manufacture of the injection-molded article of a polylactic acid resin, which is composed of a resin composition containing a polylactic acid resin and PET fibers with a lactic acid component content of 50% by weight or more, has a higher strength than conventional, and is applicable as a constituent part for larger products with heavier weights, such as copying machines and printers, can be provided. A molded article obtained by such a manufacturing method, and an electronic system including, as its constituent part, such a molded article can also be provided.

## BRIEF DESCRIPTION OF THE DRAWINGS

[FIG. 1] FIG. 1 comprises FIGs. 1(a) and 1(b) each of which is a 10,000x photomicrograph of a section of the molded article of the present invention, with FIG. 1(a) showing the section in which the void ratio (a) is 2%, and FIG. 1(b) showing the section in which the void ratio (a) is 45%.
[FIG. 2] FIG. 2 is an SEM photograph of the injection-molded article of Example. 4.
[FIG. 3] FIG. 3 is an SEM photograph of the injection-molded article of Example 5.
[FIG. 4] FIG. 4 is an SEM photograph of the injection-molded article of Comparative Example 4.

## BEST MODE FOR CARRYING OUT THE INVENTION

The present invention is hereafter described in detail.

The manufacturing method for injection-molded articles according to the present invention comprises subjecting a resin composition for use in injection molding, which contains a polylactic acid resin and PET (polyethylene terephthalate) fibers with a lactic acid component content of 50% by weight or more, and is compounded at a compounding temperature of 230°C or lower, to injection molding at an injection molding temperature of 190 to 230°C to obtain the molded article of high strength in which voids around the PET fibers are 50% or less on the PET fibers in sectional area in the article's sections, and the PET fibers within the article are not deteriorated.
The abovementioned compounding temperature is defined as the maximum temperature which the resin composition for use in injection molding has during compounding.
Similarly, the injection molding temperature is defined as the maximum temperature which the resin composition for use in injection molding has during injection molding.
The manufacturing method for injection-molded articles as above is hereafter also referred to as "the manufacturing method of the present invention."

The molded article of high strength which is obtained by the manufacturing method of the present invention is hereafter also referred to as "the molded article of the present invention."

In the following description, the ratio (percentage) of the sectional area of the void around one PET fiber, with which the relevant fiber is in contact, to the sectional area of the PET fiber in a section of the molded article of the present invention is also referred to as the "void ratio a" of the PET fiber.
The arithmetic mean for the void ratio a of 30 PET fibers in one section of the molded article of the present invention is also referred to as the "void ratio b" of the section of the article.
The arithmetic mean for the void ratio b of any three sections of one article is also referred to as the "void ratio c" of the article.
The molded article of the present invention shows a void ratio c of 50% or less.
It should be noted that the term "void ratio" herein used with no additional letters means the void ratios a, b and c comprehensively.
Specific measurement of the void ratio a will be explained later.

In the manufacturing method of the present invention, the resin composition for use in injection molding which has a specified recipe and is compounded at a specified temperature is injection molded at an injection molding temperature of 190 to 230°C. This results in the molded article (molded article of the present invention) which has sections as shown in FIG. 1 for instance. The photomicrographs of FIG. 1 show typical sections of the molded article of the present invention. FIG. 1(a) shows the section in which the void ratio a is 2%, and FIG. 1(b) shows the section in which the void ratio a is 45%.

In the molded article of the present invention, the voids around the PET fibers are 50% or less on the PET fibers in sectional area in the article's sections (that is to say, the void ratio c is 50% or less), and the PET fibers within the article are not deteriorated.
The inventor of the present invention found as a result of diligent researches that, in the injection molding of the resin composition for use in injection molding as above, a compounding temperature and an injection molding temperature of 230°C or lower each allow not only the manufacture of molded articles with an inhibited deterioration of the PET fibers, but the reduction in void ratio a, leading to molded articles with a void ratio c of 50% or less. In contrast, it proved that the PET fibers shrink considerably and are liable accordingly to have fine cracks generated at their surfaces at a temperature over 230°C. Generation of cracks will reduce the strength of the PET fibers, and the mechanical strength of molded articles at last.

The inventor of the present invention also found that an injection molding temperature of 190°C or higher imparts a necessary flowability to the resin composition for use in injection molding so as to make the composition more uniform and thereby inhibit voids from being formed within molded articles during injection molding. It was also found that a poor flowability of the resin composition for use in injection molding may cause voids at the boundary between the polylactic acid resin and the PET fibers.

In the manufacturing method of the present invention, the resin composition, which has a specified recipe as above and is compounded at a specified compounding temperature as above, is injection molded at a temperature within a narrow range of 190 to 230°C. The method as such makes it possible to manufacture the molded articles which are particularly excellent in mechanical strength, that is to say, have such a high strength as a major constituent part for larger electronic systems, such as copying machines and printers, should have. With the composition to be used in injection molding whose recipe and compounding temperature are different from those in the manufacturing method of the present invention, or whose injection molding temperature is different from that in the manufacturing method of the present invention, such molded articles of high strength as above cannot be manufactured.

According to the inventor's view, the mechanical strength of molded articles is reduced if the compounding temperature and the injection molding temperature are higher than specified because the void ratio a is increased and voids within the molded articles are enlarged, and, moreover, the PET fibers are so deteriorated due to a considerable shrinkage as to have cracks generated at their surfaces, and the PET fibers having undergone the breakage starting

from the cracks become floating in the voids formed. The mechanical strength of the molded articles obtained appears to be also reduced if the injection molding temperature is lower than specified because the resin composition for use in injection molding is made nonuniform, and even voids are generated in the composition.

In the following description, the terms "a high strength," "of high strength," and similar terms used with respect to molded articles refer to such a high strength as a major constituent part for larger electronic systems, such as copying machines and printers, should have. To be more specific, a molded article of high strength obtained by the manufacturing method of the present invention (namely, the molded article of the present invention) exhibits an Izod impact strength of 8 or more when subjected to the Izod impact test defined by JIS K-7110.

As described before, the molded article of the present invention is a molded article of high strength in which the PET fibers within the article are not deteriorated. In this regard, the term "not deteriorated" does not mean that the fibers are not deteriorated at all. The term actually means that the fibers are "not so deteriorated" as compared with the case of injection molding at an injection molding temperature without the range of 190 to 230°C, within which the injection molding temperature for the manufacturing method of the present invention falls.

The resin composition for use in injection molding which is to be employed for the manufacturing method of the present invention is illustrated below.

The resin composition for use in injection molding contains a polylactic acid resin and PET fibers. The composition as such has a lactic acid component content A (hereafter also referred to simply as "content A") of 50% by weight or more. In other words, the ratio (percentage) of the lactic acid component in the polylactic acid resin to the total weight of the resin composition for use in injection molding is 50% by weight or more. If the polylactic acid resin is a lactic acid copolymer resin as mentioned later, and lactic acid units comprise 80% by weight of the lactic acid copolymer, for instance, the ratio (percentage) of eight-tenths of the weight of the lactic acid copolymer resin to the total weight of the resin composition for use in injection molding is 50% by weight or more. If the polylactic acid resin is a lactic acid homopolymer resin, the ratio (percentage) of the weight of the lactic acid homopolymer resin to the total weight of the resin composition for use in injection molding is 50% by weight or more.

The lactic acid units (as the lactic acid component) are moieties expressed by the following formula. In the formula, n represents the number of repeating units in a copolymer resin.

[Chemical Formula 1]

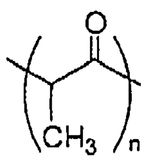

The resin composition for use in injection molding which is to be employed for the manufacturing method of the present invention is able to contribute to the prevention of global warming and the establishment of a sound material-cycle society because of its content A of 50% by weight or more. The content A is preferably not less than 60% by weight, more preferably not less than 70% by weight, and even more preferably not less than 80% by weight. The content A can be increased by suitably modifying the compounding temperature and the injection molding temperature as described later.

In the manufacturing method of the present invention, the polylactic acid resin comprises the polymer which contains the lactic acid component as at least part of its structural units; and is exemplified by lactic acid homopolymer resins, lactic acid copolymer resins, and blend resins containing such lactic acid resins.

In addition, the lactic acid component is not particularly limited in type but may be L-lactic acid, D-lactic acid, DL-lactic acid, or a mixture thereof, or else, a cyclic dimer of lactic acid, namely L-lactide, D-lactide, meso-lactide, or a mixture thereof.

The technique for preparing the polylactic acid resin is not particularly limited either. The resin may be synthesized by a conventional technique. For instance, a lactic acid homopolymer resin can be obtained by the direct dehydrocondensation of L-lactic acid, D-lactic acid, DL-lactic acid, or a mixture thereof, or the ring-opening polymerization of L-lactide, D-lactide, meso-lactide, or a mixture thereof. A lactic acid copolymer resin can be obtained by the copolymerization of the lactic acid monomer or lactide with other component copolymerizable with the monomer. Other copolymerizable component is exemplified by dicarboxylic acids, polyhydric alcohols, hydroxycarboxylic acids and lactones,

each having two or more ester linkage-forming functional groups in the molecule, as well as diverse polyesters, polyethers and polycarbonates comprising the aforementioned various components.

The weight-average molecular weight of the polylactic acid resin is not particularly limited either but may be 50,000 to 500,000, preferably 100,000 to 250,000. A weight-average molecular weight of 50,000 or more is favorable because it imparts a higher strength to the molded article of the present invention. On the other hand, a weight-average molecular weight of 500,000 or less is favorable because it allows the resin composition for use in injection molding to be readily uniform, which is likely to increase the strength of the molded article of the present invention.

Apart from the polylactic acid resin as described above, the resin composition for use in injection molding to be employed for the manufacturing method of the present invention contains PET fibers.

The PET fibers are not particularly limited in shape, length, or the like as long as they are common fibers containing polyethylene terephthalate as their major component.' PET fibers obtained by the recycling of PET bottles and so forth are also usable. The use of recycled fibers is preferable because more contribution is made to the prevention of global warming and the establishment of a sound material-cycle society.

The cross section of the PET fibers is not particularly limited in shape but may be circular. A circular cross section, as reducing the production costs of the PET fibers and enhancing the dispersibility of the fibers in the resin composition for use in injection molding, is preferable. A cross section in a special shape, such as a star-shaped cross section, a polygonal cross section, a cross section irregular in shape and a cross section with indentations, or a cross section as a composite of those in special shapes may also be available. Such cross sections are preferable because they increase the area of contact with the polylactic acid resin in the resin composition for use in injection molding so as to improve the adhesion between the fibers and the resin, which is likely to increase the strength of the molded article of the present invention.

The length (hereafter also referred to as "length L") of the PET fibers and the diameter (hereafter also referred to as "diameter D") of the cross section of the fibers are not particularly limited either. The length L is preferably 100 to 20,000 μm, more preferably 1,000 to 10,000 μm. The diameter D is preferably 1 to 20 μm, more preferably 5 to 15 μm. While a smaller diameter D is preferable because the molded article of the present invention tends to have a higher mechanical strength accordingly, too small a diameter may make injection molding difficult, or cause the resin composition for use in injection molding to be hard to make uniform. In addition, with such a diameter, the costs are generally increased. Consequently, it is preferred that the diameter D falls within the range as above.

The "diameter D" refers to the diameter of the cross section which is obtained by cutting a PET fiber perpendicularly to its longitudinal direction. If the PET fibers have a cross section other than a circular one, the diameter of the circle which is equivalent to the cross section in area (Heywood diameter)' is to be referred to.

The aspect ratio as a ratio between the length L and the diameter D (L/D) is preferably 100 to 1,000, more preferably 200 to 700, and even more preferably 300 to 500.

The inventor of the present invention found out a correlation between the aspect ratio and the MD shrink. Specifically, it was found that too high an aspect ratio increases the MD shrink so as to readily cause cracks at the surfaces of the PET fibers, leading to a reduced mechanical strength of the molded article of the present invention as obtained by injection molding. Cracks are generated at the PET fiber surfaces by thermal shrinkage, which is a phenomenon due to the internal stress of the fibers in themselves.

It was also found that the mechanical strength is reduced if the aspect ratio is too low.

After all, the inventor found that the molded article of the present invention has a higher mechanical strength if the aspect ratio falls within a specific range as above.

Preferably, the surfaces of the PET fibers are treated with a surface treating agent. The affinity of the PET fibers with the polylactic acid resin is improved by the surface treatment, so that voids are unlikely to be formed around the PET fibers, with the void ratio a being reduced. Examples of the surface treating agent which may be used include isophthalate esters.

The content B of the PET fibers in the resin composition for use in injection molding (hereafter also referred to simply as "content B," and expressed as a "percentage by weight") is not particularly limited but may be the balance, with the fibers being the sole component of the resin composition for use in injection molding other than the polylactic acid resin (the sum of the content A and the content B being 100% by weight). The content B is preferably 10 to 30% by weight, more preferably 15 to 25% by weight because the molded article of the present invention will have a higher strength.

It is preferable that the resin composition for use in injection molding containing the polylactic acid resin and the PET fibers as described above further contains a plasticizer. The plasticizer content is not limited but is preferably 1 to 30% by weight, more preferably 10 to 20%. Addition of a plasticizer allows the compounding temperature and the injection molding temperature to be lowered, so that the molded article obtained has a higher strength. In other words, addition of a plasticizer allows the resin composition to be made uniform enough even at lower compounding and injection molding temperatures than the case with no plasticizers added, so that the heat load on the PET fibers is reduced, leading to a less deterioration of the PET fibers and a higher strength of the molded article.

If the resin composition for use in injection molding contains a plasticizer with a plasticizer content falling within the preferred range as above, the compounding temperature and the injection molding temperature in the manufacturing method of the present invention can be reduced from those in the case with no plasticizers added by about 10°C. To be more specific: The compounding temperature in the manufacturing method of the present invention that is to be 230°C or lower can newly be specified to 220°C or lower. Similarly, the injection molding temperature which is to be 230°C or lower can newly be specified to 220°C or lower. The resin composition containing a plasticizer can be made uniform enough without any trouble even at a temperature of 190 to 200°C so as to obtain the molded article of the present invention. If the resin composition for use in injection molding which contains no plasticizers is injection molded at an injection molding temperature of 190 to 200°C, short shot may occur during injection molding. The molded articles obtained may have cracks generated within them. An injection molding temperature higher than 200°C is thus preferred if the resin composition for use in injection molding does not contain a plasticizer.

The plasticizer which the resin composition for use in injection molding can contain is not particularly limited, and examples thereof include phthalate-, phosphate-, adipate- or other ester-based plasticizers, and epoxy-based plasticizers.
It is particularly desirable to use a monomeric phosphate ester.

The resin composition for use in injection molding, which contains the polylactic acid resin and the PET fibers, and preferably contains the plasticizer as well, may contain some additional components, such as antioxidant, heat resistance stabilizer, ultraviolet absorber, light stabilizer, antistatic agent, neutralizing agent, pigment or other colorant, dispersant, rosin, synthetic rubber, inorganic additive, flame retarder, antifungal agent, perfume, mold release agent, and antihydrolysis agent. The amount of such additional components is preferably 20% by weight or less, more preferably 10% by weight or less, in total.

The resin composition for use in injection molding to be employed for the manufacturing method of the present invention contains the polylactic acid resin and the PET fibers as described above. The resin composition for use in injection molding as such is prepared through the compounding at a compounding temperature of 230°C or lower.
The compounding temperature is preferably 190 to 230°C, more preferably 210 to 220°C. In that case, the molded article of the present invention will have a higher strength because a more favorable void ratio is attained and, moreover, the PET fibers are hard to deteriorate owing to their inhibited shrinkage. As stated before, the polylactic acid resin will be contained in the resin composition for use in injection molding in a higher proportion. The MD shrink of the PET fibers will be reduced.
The MD shrink is to be construed as the ratio of shrinkage of a PET fiber in its longitudinal direction. A compounding temperature and an injection molding temperature of 225 to 230°C each are particularly preferred because an MD shrink of about 3 to 10% and a void ratio of about 1 to 5% are likely to be attained at such temperatures.

The compounding is not particularly limited in method thereof. As an example, a known compounder may be used to carry out compounding. Typical known compounders include a twin screw compounder, such as the model TEM-26SS from TOSHIBA MACHINE and the model TEX28V from the Japan Steel Works.
As mentioned before, the compounding temperature is defined as the maximum temperature which the resin composition for use in injection molding has during compounding. If the compounding is carried out by using a twin screw compounder, the maximum temperature which the resin composition for use in injection molding has between the kneading zone and the tip zone of screws is generally considered as the compounding temperature.

The resin composition for use in injection molding which has been compounded is preferably pelletized for the injection molding with a molding machine.

Pelletizing of the resin composition for use in injection molding is not particularly limited in method thereof. A known pelletizer may be used to form pellets. Typical known pelletizers include the model SCF-100 manufactured by Kobe Steel.

The size and shape of pellets are not limited either. Exemplary pellets are of a cylindrical shape with a diameter of 2 to 3 mm and a height of 5 to 10 mm.

According to the manufacturing method of the present invention, the resin composition for use in injection molding which is obtained through the processes as above is injection molded at an injection molding temperature of 190 to 230°C.
The injection molding temperature is preferably 210 to 220°C. In that case, the molded article of the present invention will have a higher strength because a more favorable void ratio is attained and, moreover, the PET fibers are hard to deteriorate owing to their inhibited shrinkage. As stated before, the polylactic acid resin will be contained in the resin composition for use in injection molding in a higher proportion. The MD shrink of the PET fibers will be reduced. A compounding temperature and an injection molding temperature of 225 to 230°C each are particularly preferred because an MD shrink of about 3 to 10% and a void ratio of about 1 to 5% are likely to be attained at such temperatures.

The method of injection molding is not particularly limited, but a known injection molding method may be employed. In an exemplary method, the resin composition for use in injection molding as pelletized is melted by heating, then pressed by a plunger or screw so that it may be poured into a mold until the mold is filled with the composition, and

a molded article is obtained by solidifying or curing the resin composition in the mold.
To be more specific, usable injection molding methods include the method in which the resin composition for use in injection molding is injection molded on an in-line screw system to obtain the molded article of the present invention. The injection molding method on an in-line screw system comprises the step of loading a hopper with a resin composition for use in injection molding in pellet form, the step of plasticization and measurement in a heating cylinder, the step of injection from the heating cylinder into a mold, the step of dwell and cooling in the mold, and the step of removal after mold opening.

As mentioned before, the injection molding temperature is defined as the maximum temperature which the resin composition for use in injection molding has during injection molding. If injection molding is carried out on an in-line screw system, the temperature which the resin composition for use in injection molding has in the vicinity of a nozzle immediately before it is poured into a mold is generally considered as the injection molding temperature.

By the manufacturing method of the present invention as described above, the molded article of high strength in which voids around the PET fibers are 50% or less on the PET fibers in sectional area in the article's sections, and the PET fibers within the article are not deteriorated, namely the molded article of the present invention, can be manufactured.

Subsequently, the molded article of the present invention is explained.
In the molded article of the present invention, the ratio of the sectional area of voids around the PET fibers in the article's sections to the sectional area of the PET fibers, namely the void ratio c, is 50% or less.
The void ratio c is preferably 30% or less, more preferably 10% or less. In that case, the molded article of the present invention will have a higher strength.

Nevertheless, the void ratio c is preferably other than 0%, more preferably 1% or more. In that case, the molded article of the present invention will have a higher strength.
As described before, a lower void ratio is more preferable. The strength of the molded article of the present invention, however, is likely to be improved by the presence of minimal voids as compared with the case with no voids present, that is to say, the case where the void ratio is 0%.
With respect to the reasons for this, which have not been definite, the inventor of the present invention presumes that the strength of a PET fiber in its longitudinal direction, and the frictional force which is generated between PET fibers and a polylactic acid resin when force is exerted on a molded article play some roles.

On the molded article of the present invention, the void ratio a is measured as follows.
The void ratio a for the molded article of the present invention refers to the ratio which is determined by the method as described below.
A molded article manufactured with the molded article of the present invention is initially cut to take a photomicrograph of a section. The photomicrograph is taken at a magnification of 10,000 (that is to say, such a photograph as shown in FIG. 1 is taken).
Then in the photograph, the sectional area of a specified PET fiber ("Sectional area I") and the sectional area of the void around the fiber of interest (void with which the PET fiber is in contact) ("Sectional area ii") are found. The ratio between the sectional areas ((Sectional area ii) / (Sectional area I) x 100) is calculated as the void ratio a of the PET fiber of interest.

The molded article of the present invention may have a mean thickness (hereafter also referred to as "mean thickness X") of 1.5 mm or more and a weight (hereafter also referred to as "weight Y") of 0.15 kg or more. In addition, the molded article of the present invention may meet Formula (I) below.

$$\text{Formula (I)}: Y/X = 0.03 \sim 3.3.$$

The molded article of the present invention has such a high strength as is generally required of a larger molded article with a mean thickness X and a weight Y falling within the above ranges, respectively. The strength of the molded article of the present invention is as high as the strength which is generally needed by a thin and large molded article meeting the above condition Y/X.
A molded article obtained by the manufacturing method of the present invention as described before can have a high strength even under a heavier weight if the injection molding temperature, the ratios B/A and L/D, and so forth fall within their respective preferable ranges, or a plasticizer is added. As an example, the molded article may have a mean thickness X of 2 mm or more and a weight Y of 0.2 kg or more. Moreover, the molded article may also have a mean thickness X of 3 mm or more and a weight Y of 0.3 kg or more, or a mean thickness X of 5 mm or more and a weight Y of 0.5 kg or more, or even a mean thickness X of 10 mm or more and a weight Y of 1.0 kg or more, as required.

In this regard, the mean thickness X refers to the arithmetic mean for thickness at any ten points of the molded article of the present invention.

Preferably, the molded article of the present invention meets the following Formula (II) as well.

$$\text{Formula (II): } (B/A)/X = 0.02 \sim 0.2.$$

The inventor of the present invention found that the strength of the molded article of the present invention is particularly improved if there is a relation expressed by Formula (II) between the ratio of the content B to the content A of the resin composition for use in injection molding and the mean thickness X.

In Formula (II), the value of (B/A)/X is preferably 0.06 to 0.15. In that case, the value of Y/X can be 2.5 to 3.3 because the molded article of the present invention has a much higher strength.

It is preferable to fabricate a cabinet using the molded article of the present invention as its major constituent part because a cabinet of high strength is obtained.

It is also preferable to apply such a cabinet to an electronic system. An electronic system provided with such a cabinet is favorable because of its high strength. Even if the electronic system weighs 10 kg or more, for instance, a high strength as required will be attained.

Specific examples of the electronic system to be provided with such a cabinet include copying machines, printers, photoprinting apparatus, printing presses, medical instruments, and instruments for life-science use.

EXAMPLES

<Example 1>

The polylactic acid resin used was LACEA (registered trademark) (product number, H-100; manufactured by Mitsui Chemicals, Inc.), and PET fibers were prepared from polyester filament yarn (manufactured by TOYOBO CO., LTD.).
The PET fibers had a diameter D of 15 μm, a length of 7,000 μm, and a ratio L/D of 467.

The polylactic acid resin and the PET fibers as above were mixed together by using a twin screw compounding extruder (manufactured by TOSHIBA MACHINE CO., LTD.; product number, TEM-26SS). The amounts of the polylactic acid resin and the PET fibers were 4 kg in total, and the mixing ratio between the polylactic acid resin and the PET fibers was 90:10 (by weight). The compounding temperature was 220°C. After compounding, the resin composition for use in injection molding as extruded was cut by a water-cooled pelletizer into pellets having the cross section which is almost a circle with a diameter of 2 to 3 mm in shape, and a length of about 7 mm, and the pellets were immersed in tap water.

Subsequently, the resin composition for use in injection molding in pellet form was removed from tap water, and the resin composition pellets were dried by a dryer for about eight hours under such conditions that the temperature was 80°C and the relative humidity was about 0%, then injection molded at an injection molding temperature of 200°C to obtain a cabinet 200 mm square with a mean thickness of 4.0 mm. Injection molding was carried out using the electric injection molding machine manufactured by FANUC LTD whose product number is S-2000i100A.

Next, a notched specimen defined by JIS K-7110 was cut out of the cabinet as obtained. The specimen was of Type 1 (length, 80 ± 2 mm; width, 10.0 ± 0.2 mm; thickness, 4.0 ± 0.2 mm), with a notch of Type A (notch radius, 0.25 ± 0.05 mm; width of notched portion, 8.0 ± 0.2 mm). Such a notched specimen has a weight of 3.3 to 3.8 g.
The Izod impact test as defined by JIS K-7110 was conducted on the notched specimen to measure the Izod impact strength thereof. The Izod impact strength measurement is set forth in Table 1.
In addition, the specimen was cut at a given point to determine the void ratio b by taking a photomicrograph of a section. The Izod impact strength and void ratio b as found are set forth in Table 1.

<Example 2>

Following the procedure of Example 1 except for a mixing ratio between the polylactic acid resin and the PET fibers of 70:30 instead of 90:10, and an injection molding temperature of 215°C instead of 200°C, the testing was carried out.
The test results are set forth in Table 1.

<Example 3>

Following the procedure of Example 1 except for an injection molding temperature of 230°C instead of 200°C, the testing was carried out.

The test results are set forth in Table 1.

<Example 4>

The polylactic acid resin and PET fibers as used in Example 1, as well as triphenyl phosphate (TPP) (manufactured by DAIHACHI CHEMICAL INDUSTRY CO., LTD.), which is a kind of monomeric phosphate ester serving as plasticizer and flame retarder, and a condensed phosphate ester (trade name, PX-200; manufactured by DAIHACHI CHEMICAL INDUSTRY CO., LTD.) serving as flame retarder were mixed together in a similar manner to Example 1. The amounts of the polylactic acid resin, the PET fibers, the PPS, and the condensed phosphate ester were 4 kg in total, and the mixing ratio between the polylactic acid resin and the PET fibers, and the PPS, and the condensed phosphate ester was 60:20:10:10. The compounding temperature was 200°C. The pellets as obtained after compounding were treated and injection molded in a similar manner to Example 1. The injection molding temperature was 200°C. The Izod impact test was then conducted as in Example 1.
An SEM photograph of the injection-molded article was taken to determine whether or not cracks were present at the PET fiber surfaces within the injection-molded article. The photograph is shown in FIG. 2.

<Example 5>

Following the procedure of Example 4 except for a compounding temperature and an injection molding temperature of 220°C each, the treatment and the testing were carried out. In addition, a similar SEM photograph was taken, which is shown in FIG. 3.

<Example 6>

The composition as prepared in Example 1 was separately molded under the same conditions as Example 1 to obtain a boxy part. Specifically, a boxy part (nearly boxy part in the shape of a rectangular parallelepiped with its five faces out of six, or an interior cover) having a thickness X of 2.0 mm (length, 300 mm; width, 80 mm; height, 20'mm) was formed using an injection mold. The weight Y of the part was 0.15 kg. No cracks were generated by the molding, so that the molded boxy part had an adequate impact strength.

<Comparative Example 1>

Talc (product number, C-3; manufactured by NIPPON TALC Co., Ltd.) and glass fibers (chopped strands; filament diameter, 10 μm; number of bundled filaments, 2,000; manufactured by Asahi Fiber Corporation) were used.
The talc and the glass fibers as above, as well as the same polylactic acid resin as Examples 1 to 3 were mixed together by using the same twin screw compounding extruder as Examples 1 to 3. Upon mixing, the total of the amounts of the materials was the same as Example 1, and the mixing ratio between the polylactic acid resin and the talc, and the glass fibers was 70:15:15 (by weight). The compounding temperature was 220°C. In a similar manner to those in Examples 1 to 3, similar pellets were obtained.
The composition in pellet form as obtained was injection molded at an injection molding temperature of 220°C. Injection molding was carried out with the same electric injection molding machine as Examples 1 to 5.
Then, a notched specimen defined by JIS K-7110 was provided as in Example 1.
The test results are set forth in Table 1.
The testing of Comparative Example 1 was performed as an additional experiment on the composition as described in Patent Document 1.

<Comparative Example 2>

Kenaf (mean fiber length, 300 μm to 20 mm) was used.
The kenaf and the same polylactic acid resin as Examples 1 to 5 were mixed together by using the same twin screw compounding extruder as Examples 1 to 5. Upon mixing, the total of the amounts of the materials was the same as Example 1, and the mixing ratio between the polylactic acid resin and the kenaf was 80:20 (by weight). The compounding temperature was 220°C. In a similar manner to those in Examples 1 to 5, similar pellets were obtained.
The composition in pellet form as obtained was injection molded at an injection molding temperature of 220°C. Injection molding was carried out with the same electric injection molding machine as Examples.
Then, a notched specimen defined by JIS K-7110 was provided as in Example 1.
The test results are set forth in Table 1.
The testing of Comparative Example 2 was performed as an additional experiment on the composition as described in

Patent Document 2.

<Comparative Example 3>

Following the procedure of Example 1 except for an injection molding temperature of 240°C instead of 200°C, the testing was carried out.
The test results are set forth in Table 1.

<Comparative Example 4>

Following the procedure of Example 4 with the exception that the mixing ratio of the polylactic acid resin was 70% by weight, no TPP was used, and the compounding temperature and the injection molding temperature were each 235°C, the treatment and the testing were carried out. In addition, a similar SEM photograph was taken, which is shown in FIG. 4.

<Comparative Example 5>

Following the procedure of Example 1 except for a compounding temperature of 180°C instead of 220°C, the testing was carried out.

<Comparative Example 6>

Following the procedure of Example 1 except for an injection molding temperature of 180°C instead of 200°C, the testing was carried out.
[Table 1]

Table 1

| | Ex. 1 | Ex. 2 | Ex. 3 | Ex. 4 | Ex. 5 | Com. Ex. 1 | Com. Ex. 2 | Com. Ex. 3 | Com. Ex. 4 |
|---|---|---|---|---|---|---|---|---|---|
| Polylactic acid resin [% by weight] | 90 | 70 | 90 | 60 | 60 | 70 | 80 | 90 | 70 |
| PET fibers [% by weight] | 10 | 30 | 10 | 20 | 20 | | | 10 | 20 |
| Talc [% by weight] | | | | | | 15 | | | |
| Glass fibers [% by weight] | | | | | | 15 | | | |
| Kenaf [% by weight] | | | | | | | 20 | | |
| TPP [% by weight] | | | | 10 | 10 | | | | |
| Condensed phosphate ester [% by weight] | | | | 10 | 10 | | | | 10 |
| Compounding temperature | 220 | 220 | 220 | 200 | 220 | 220 | 220 | 220 | 235 |
| Injection molding temperature [°C] | 200 | 215 | 230 | 200 | 220 | 220 | 220 | 240 | 235 |
| Void ratio (%) | 2 | 3 | 20 | 3 | 15 | - | - | 55 | 53 |

(continued)

| | Ex. 1 | Ex. 2 | Ex. 3 | Ex. 4 | Ex. 5 | Com. Ex. 1 | Com. Ex. 2 | Com. Ex. 3 | Com. Ex. 4 |
|---|---|---|---|---|---|---|---|---|---|
| Impact strength ($kJ/m^2$) | 11 | 23 | 15 | 18 | 16 | 7.5 | 3.8 | 4.5 | 4.5 |

In each of Examples 1 to 5, the Izod impact strength was high as compared with any of Comparative Examples 1 to 4. An especially high value was attained in Example 2 with the injection molding temperature being within a preferable range.
In Comparative Examples 1 to 4, a low Izod impact strength of no more than 7.5 $kJ/m^2$ was found. An injection-molded article having such a low strength cannot be applied as a part for larger products with heavier weight, such as copying machines and printers.

As seen from FIG. 2, the injection-molded article of Example 4 which was obtained at a compounding temperature and an injection molding temperature of 200°C each had no cracks at the PET fiber surfaces.
The injection-molded article of Example 5 which was obtained at a compounding temperature and an injection molding temperature of 220°C each had minimal cracks at the PET fiber surfaces, as shown in FIG. 3.
In Comparative Example 4 in which the compounding temperature and the injection molding temperature were each 235°C, as shown in FIG. 4, marked cracks were generated at the PET fiber surfaces.

In the case of Comparative Example 5, compounding in itself was difficult due to a low flowability of the composition, and a uniform mixing could not be achieved. It appeared therefore that only a molded article with a void ratio c higher than 50% and a low strength (an impact strength of less than 8 $kJ/m^2$) would be obtained if the composition as such was injection molded.
In Comparative Example 6, short shot occurred during injection molding due to a low flowability. In appearance, moreover, the molded article had cracks. It appeared therefore that only a molded article with a void ratio c higher than 50% and a low strength (an impact strength of less than 8 $kJ/m^2$) would be obtained by injection molding.

## Claims

1. A manufacturing method for injection-molded articles, comprising subjecting a resin composition for use in injection molding, which contains a polylactic acid resin and PET fibers with a lactic acid component content of 50% by weight or more, and is compounded at a compounding temperature of 230°C or lower, to injection molding at an injection molding temperature of 190 to 230°C to obtain a molded article of high strength in which voids around the PET fibers are 50% or less on the PET fibers in sectional area in the article's sections, and the PET fibers within the article are not deteriorated.

2. The manufacturing method for injection-molded articles according to claim 1, wherein said resin composition for use in injection molding contains said PET fibers in a proportion of 10 to 30% by weight.

3. The manufacturing method for injection-molded articles according to claim 1 or 2, wherein said PET fibers have a cross section with a diameter D of 1 to 20 μm, and a ratio of a length L (μm) of said PET fibers to the diameter D (L/D) is 100 to 1,000.

4. A molded article of high strength obtainable by the manufacturing method for injection-molded articles according to any one of claims 1 through 3, wherein the voids around the pET fibers are 50% or less on the PET fibers in sectional area in the article's sections, and the PET fibers within the article are not deteriorated.

5. The molded article of high strength according to claim 4, which has a mean thickness X of 1.5 mm or more and a weight Y of 0.15 kg or more.

6. The molded article of high strength according to claim 4 or 5, which meets Formula (I) below:

$$\text{Formula (I): } Y/X = 0.03 \sim 3.3.$$

7. A cabinet comprising the molded article of high strength according to any one of claims 4 through 6 as its major

constituent part.

**8.** An electronic system which includes the cabinet according to claim 7 and weighs 10 kg or more.

**9.** The electronic system according to claim 8, which is a copying machine, a printer, a photoprinting apparatus, a printing press, a medical instrument, or an instrument for life-science use.

FIG.1A

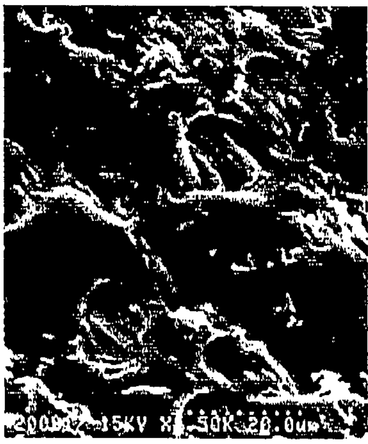

FIG.1B

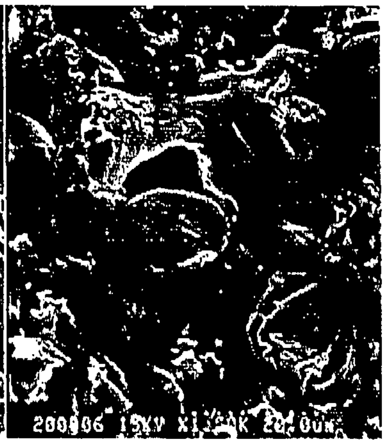

FIG.2

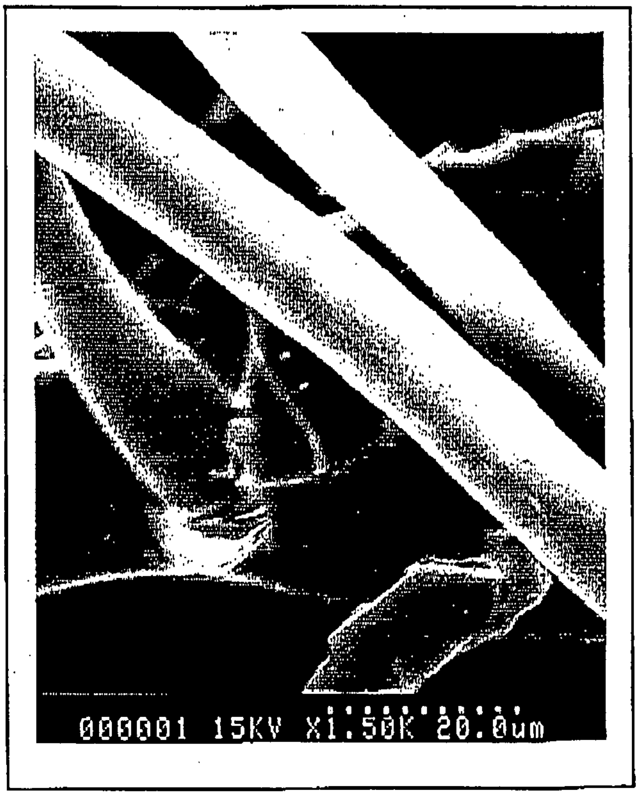

FIG.3

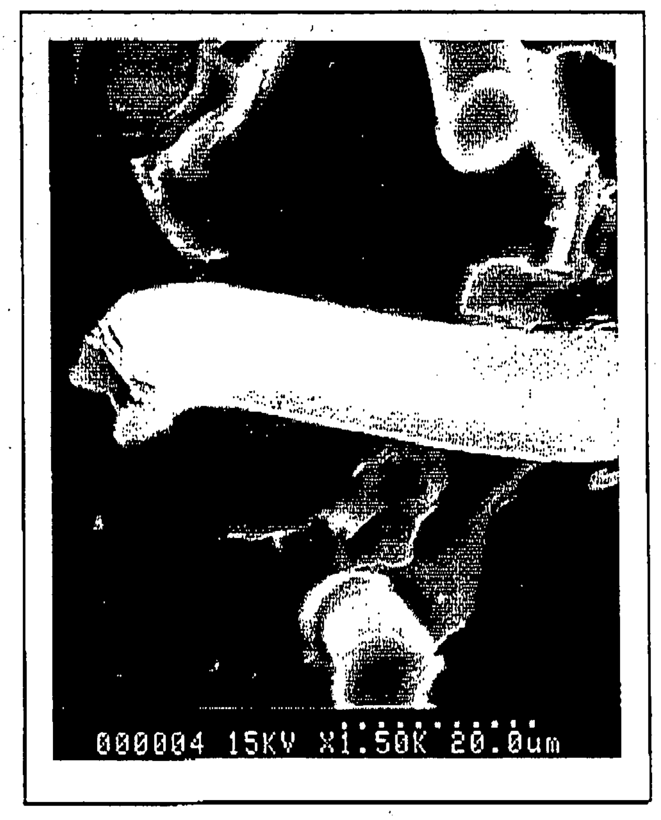

FIG.4

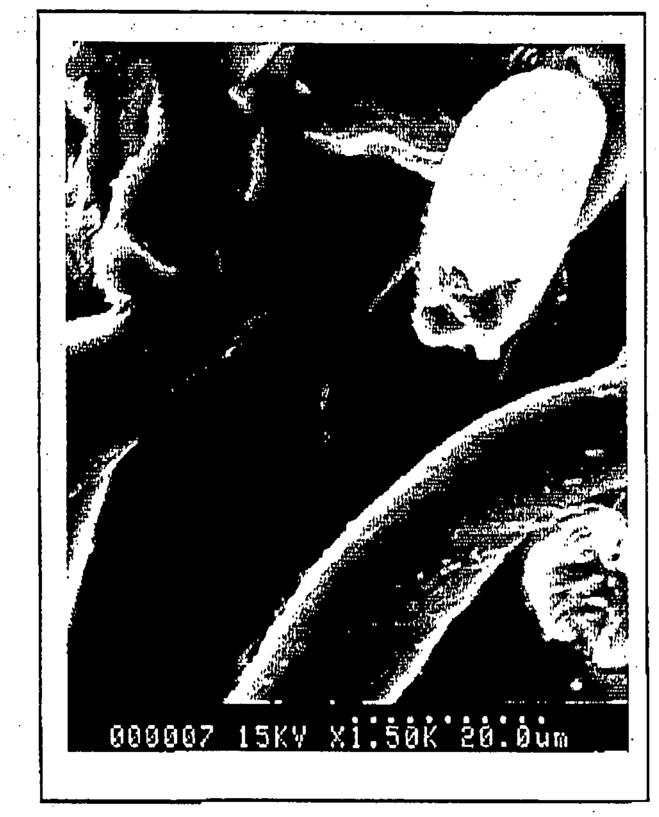

**INTERNATIONAL SEARCH REPORT**

International application No.
PCT/JP2008/062602

A. CLASSIFICATION OF SUBJECT MATTER
*B29C45/00*(2006.01)i, *C08J5/00*(2006.01)i, *C08K7/02*(2006.01)i, *C08L67/02*(2006.01)i, *C08L67/04*(2006.01)i, *C08L101/16*(2006.01)i, *B29K67/00*(2006.01)n, *B29K105/12*(2006.01)n
According to International Patent Classification (IPC) or to both national classification and IPC

B. FIELDS SEARCHED
Minimum documentation searched (classification system followed by classification symbols)
B29C45/00-45/84, C08J5/00-5/02, C08J5/12-5/22, C08K3/00-13/08, C08L1/00-101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2007/015371 A1 (Unitika Ltd.), 08 February, 2007 (08.02.07), Claims; Par. Nos. [0039], [0069], [0070], [0083], [0085] to [0122] (Family: none) | 1-9 |
| A | JP 2006-176644 A (Toyobo Co., Ltd.), 06 July, 2006 (06.07.06), Full text (Family: none) | 1-9 |
| A | JP 2007-091790 A (Toyobo Co., Ltd.), 12 April, 2007 (12.04.07), Full text (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 August, 2008 (28.08.08) | 16 September, 2008 (16.09.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/062602

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-023250 A (Mitsubishi Plastics, Inc.), 27 January, 2005 (27.01.05), Full text (Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004007198 A
- JP 2003407799 A